(19) **Europäisches Patentamt / European Patent Office / Office européen des brevets**

(11) **EP 1 619 900 B1**

(12) **EUROPEAN PATENT SPECIFICATION**

(45) Date of publication and mention
of the grant of the patent:
**03.09.2008 Bulletin 2008/36**

(51) Int Cl.:
*H04N 7/26* (2006.01)    *H04N 7/50* (2006.01)

(21) Application number: **05105717.2**

(22) Date of filing: **27.06.2005**

(54) **Bit rate controller**

Bitratensteuereinrichtung

Contrôleur de débit binaire

(84) Designated Contracting States:
**DE GB NL**

(30) Priority: **22.07.2004 KR 2004057240**

(43) Date of publication of application:
**25.01.2006 Bulletin 2006/04**

(73) Proprietor: **Samsung Electronics Co., Ltd**
**Suwon-si, Gyeonggi-do 442-742 (KR)**

(72) Inventor: **Lee, Sang-youp,**
**120-1302 Jangmi-maeul Kolon Apt.**
**Seongnam-si, Gyeonggi-do (KR)**

(74) Representative: **Geary, Stuart Lloyd et al**
**Venner Shipley LLP**
**20 Little Britain**
**London EC1A 7DH (GB)**

(56) References cited:
WO-A-00/18137          WO-A-02/089486
WO-A-03/028237          US-A- 5 761 398

**Description**

The present invention relates to a bit rate controller for an image frame sequence compressor comprising a controller.

With the development of microprocessors, semiconductors and digital signal processors, technology for digitizing, storing, and transmitting an image signal has rapidly developed. However, when an image signal is digitally stored and transmitted, the bandwidth of the uncompressed digital image signal is very large compared to an equivalent analogue transmission. Thus, the digital image signal is compressed to remove surplus information allowing the storage and transmission channel to be used economically and efficiently.

To this end, a Discrete Cosine Transform (DCT)-based compression method is widely used to compress image signals. In this compression method, the spectrum of the image signal on which DCT is performed is concentrated in the low frequency end. Thus, image information of a raw image signal can be fully represented by using only a small number of bits by fully coding the low frequency portion.

Also, variable length coding (VLC) is performed on the DCT-compressed image signal so as to further compress the DCT-compressed image signal. The VLC variably allocates and transmits predetermined code words using the probability density of the image signal information. Thus, the VLC is suitable for non-uniformly distributed image signal information to be processed. Therefore, DCT-based VLC is used as the compression method for fully representing the image signal having non-uniformly distributed image information.

However, in order to ensure that the transmission system is stable, a controlled bit rate is required to transmit the bits of the compressed signal at a constant transmission rate. In other words, when compressed image signals using VLC are stored or transmitted, the bit rate per unit time must be constant. Thus, a buffer is needed to control the bit rate. Here, the quantization level of a quantizer is adjusted to control the bit rate.

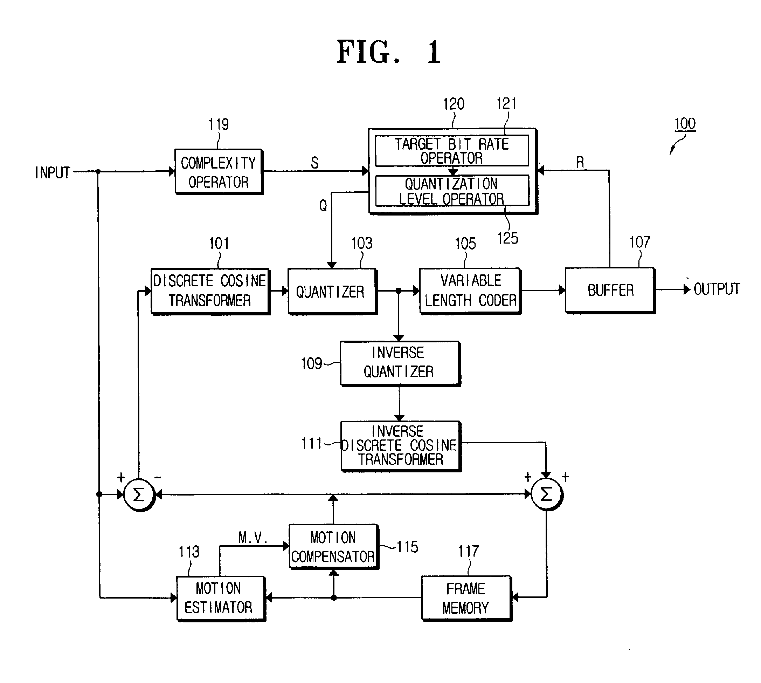

Figure 1 is a block diagram of a known DCT-based compressor. Referring to Figure 1, a known DCT-based compressor 100 comprises a discrete cosine transformer 101, a quantizer 103, a variable length coder 105, a buffer 107, an inverse quantizer 109, an inverse discrete cosine transformer 111, a motion estimator 113, a motion compensator 115 and a frame memory 117. The known DCT-based compressor 100 further comprises a complexity operator 119 and a bit rate controller 120.

The discrete cosine transformer 101 performs DCT on a frame of an input image signal to be compressed. The result of the DCT is to transform the image signal from the spatial domain into the frequency domain. The quantizer 103 approximates coefficient data output from the discrete cosine transformer 101 into a finite number of values. These values are scanned, in a zigzag manner, to one-dimensionally rearrange the values. Here, the quantizer 103 performs a quantization process based on a quantization level Q output from the bit rate controller 120. Here, the quantization level Q is also called a quantization parameter in the Motion Picture Experts Group (MPEG)-4 specifications.

The variable length coder 105 performs VLC on the data output from the quantizer 103. This further compresses the data. The buffer 107 sequentially stores the data output from the variable length coder 105 and sequentially outputs the data. Thus, the buffer 107 recognises the bit rate information R of the frame to be compressed. The buffer 107 also provides bit rate information R of the frame immediately preceding the frame to be compressed (hereinafter referred to as an 'immediately-preceding frame') to the bit rate controller 120.

The inverse quantizer 109 receives the data from the quantizer 103 and inverse-quantizes the data. The inverse discrete cosine transformer 111 performs inverse DCT on data output from the inverse quantizer 109. This decodes the data back into a raw image signal. The motion estimator 113 generates a motion vector M.V. according to data and the raw image signal output from the inverse discrete cosine transformer 111. The motion compensator 115 estimates motion compensation from the immediately-preceding frame or from a plurality of previous frames in the order of coding using the motion vector M.V. output from the motion estimator 113 and outputs the estimation result. Frame memory 117 stores the image information transmitted using the inverse discrete cosine transformer 111 or the like.

The bit rate controller 120 comprises a target bit rate operator 121 and a quantization level operator 125. The complexity operator 119 determines the coding complexity of the frame to be compressed and generates a complexity coefficient S in response. The bit rate controller 120 receives the complexity coefficient S from the complexity operator 119 and the bit rate information R of the immediately-preceding frame from the buffer 107. The target bit rate operator 121 generates a target bit rate $R_T$ of the frame to be compressed based on bit rate information R of the previous frames comprising the immediately-preceding frame and the bit rates of uncompressed frames of the image signal. The target bit rate operator 121 outputs the target bit rate $R_T$ to the quantizer level operator 125. The quantization level operator 125 calculates the quantization level Q based on the target bit rate $R_T$ and the complexity coefficient S output from the complexity operator 119 for using Equation 1:

$$R_T = X_1 \times S \times Q^{-1} + X_2 \times S \times Q^{-2.} \qquad \qquad \dots (1)$$

wherein $R_T$ denotes the target bit rate of the frame to be compressed, S denotes the complexity coefficient, Q denotes the quantization level, and $X_1$ and $X_2$ denote modelling parameters that can vary to provide optimal compression for any compressor. Equation 1 is described based on the MPEG-4 specifications.

The quantization level Q generated by the quantization level operator 125 is output to the quantizer 103. Accordingly, the frame to be compressed is compressed in dependence on the bit rate which is based on the complexity coefficient S of the immediately-preceding frame.

As described abovc, the known DCT-based compressor 100 additionally comprises the complexity operator 119. However, the complexity operator 119 determines the complexity coefficient S using the raw image signal, which speed at which compression takes place. Also, since the complexity operator 119 determines the complexity coefficient S in the unit of pixels, a high capacity memory is required. Thus, the manufacturing costs of the known DCT-based compressor 100 are increased. In addition, in some cases the complexity operator 119 is not present on legacy hardware. In these cases, the complexity operator 119 may not be used.

WO 03/028237 describes a process of bit rate control in which two different averaging periods are employed to meer a long term bit rate target and to achieve a short term quick reaction.

Accordingly, the present general inventive concept made to solve the above-mentioned problems and to provide other advantage, and an aspect of the present general inventive concept is to provide an apparatus and a method for controlling a bit rate to reflect factors of coding complexity without directly determining the coding complexity.

According to the invention, there is provided a controller for generating a quantization level for use in compressing a current frame in a sequence of frames of an image signal, according to claim 1 of the appended claims.

According to the invention, there is also provided a method of calculating a quantisation level for use in compressing a current frame of an image signal, according to claim 6 of the appended claims.

An embodiment of the present invention will now be described, by way of example only, and with reference to Figures 2 to 4 of the accompanying drawings, in which:

Figure 1 is a block diagram of a known DCT-based compressor;

figure 2 is a block diagram of a DCT-based compressor, according an embodiment of the present invention;

Figure 3 is a block diagram of a bit rate controller shown in Figure 2 according to an embodiment of the present invention; and

Figure 4 is a flowchart illustrating a method of controlling a bit rate, according to an embodiment of the present invention.

Throughout the drawings, it should be noted that like reference numbers are used to depict the same or similar elements, features and structures.

The matters defined in the description such as a detailed construction and elements are exemplary. Thus, it is apparent that various changes and modifications can be made to the examples provided herein. Also, well-known functions or constructions are not described in detail in order to provide a clear and concise description of the exemplary embodiment of the present invention.

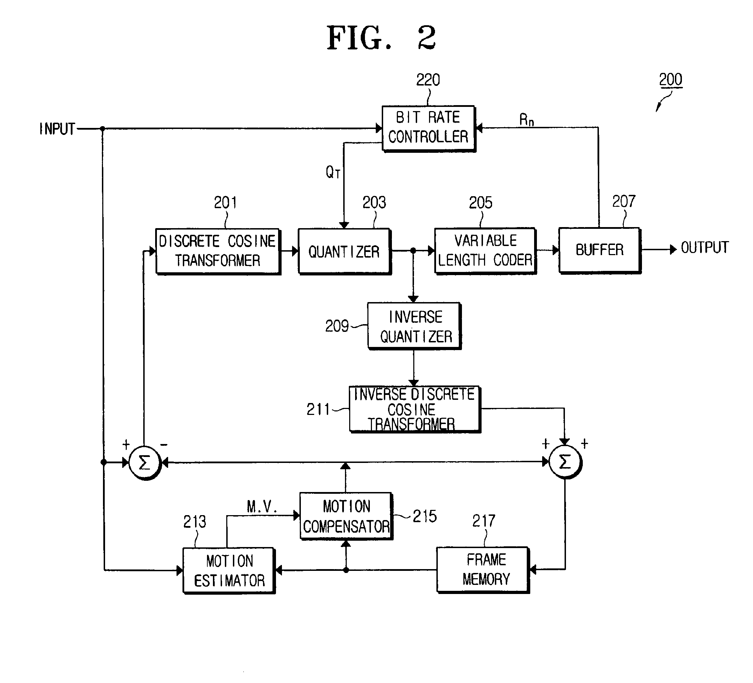

Referring to Figure 2, a DCT-based compressor 200 comprises a discrete cosine transformer 201, a quantizer 203, a variable length coder 205, a buffer 207, an inverse quantizer 209, an inverse discrete cosine transformer 211, a motion estimator 213, a motion compensator 215, and a frame memory 217. The DCT-based compressor 200 further comprises a bit rate controller 220.

The bit rate controller 220 receives bit rate information $R_n$ of the immediately-preceding frame from the buffer 207. The bit rate controller 220 generates a target quantization level $Q_T$ based on the bit rate information $R_n$ of the immediately-preceding frame and outputs the target quantization level $Q_T$ to the quantizer 203. The quantizer 203 performs a quantization process based on the target quantization level $Q_T$. According to this embodiment of the present invention, although the complexity operator 119 which is shown in Figure 1 is not described in detail here, the coding complexity is reflected in the target quantization level $Q_T$.

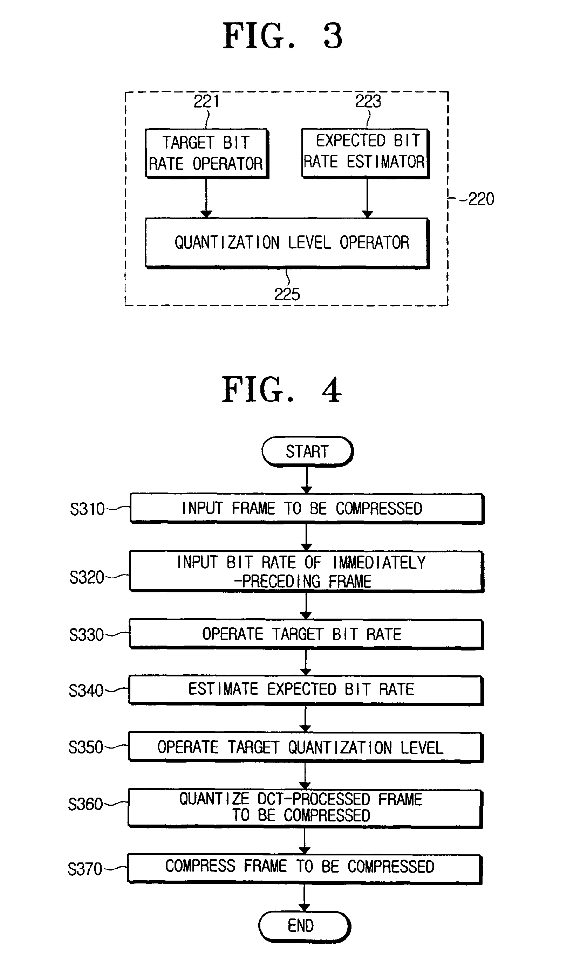

Referring to Figure 3, the bit rate controller 220 comprises a target bit rate operator 221, an expected bit rate estimator 223, and a quantization level operator 225.

The target bit rate operator 221 generates a target bit rate $R_T$ of the frame to be compressed based on the bit rate information $R_n$ of the immediately-preceding frame and bit rates of uncompressed frames of the image signal. The target bit rate operator 221 outputs the target bit rate $R_T$ to the quantization level operator 225. Here, the target bit rate $R_T$ is preferably determined in dependence on a ratio of the bit rate information $R_n$ of the immediately-preceding frame, bit rates of previous frames and the bit rates of the uncompressed frames of the image signal.

The expected bit rate estimator 223 estimates the expected bit rate $R_{n+1}$ of the frame to be compressed using bit rate information $R_{n-a}$, $R_{n-a+1}$,..., $R_{n-1}$, and $R_n$ of a plurality of previous frames and outputs the expected bit rate $R_{n+1}$ to the quantization level operator 225. Here, the number of the plurality of previous frames can be changed depending on manufacturer or user.

The expected bit rate estimator 223 may use various estimation filters which are capable of estimating data in an expected bit rate estimation method. For example, the expected bit rate estimator 223 may use an average filter, a Kalman filter, or any other suitable filter. However, this embodiment uses any expected bit rate estimation method which allows the bit rate of a frame to be compressed to be estimated from bit rate information of previous frames.

The quantization level operator 225 stores the quantization level information $Q_n$ applied to the immediately-preceding frame.

The quantization level operator 225 determines a target quantization level $Q_T$ to be applied to the frame to be compressed based on the target bit rate $R_T$ output from the target bit rate operator 221, the expected bit rate $R_{n+1}$ output from the expected bit rate estimator 223, and the stored quantization level $Q_n$ applied to the immediately-preceding frame. Here, the target quantization level $Q_T$ is calculated by using Equation 2:

$$Q_T = (Q_n \ / \ R_T) \times R_{n+1}. \qquad\qquad \ldots (2)$$

Therefore, according to this embodiment, factors of coding complexity are considered without the need for a complexity operator to determine a quantization level. This will now be described in further detail.

Hereinafter, $Q_n$ denotes the quantization level applied to the immediately-preceding frame, and $Q_{n+1}$ denotes a virtual quantization level to be applied to the frame to be compressed. Also, $A_n$ denotes a complexity reflection parameter of the immediately-preceding frame, and $A_{n+1}$ denotes a complexity reflection parameter of the frame to be compressed. In addition, $R_n$ denotes the bit rate information of the immediately-preceding frame, and $R_{n+1}$ denotes the expected bit rate of the frame to be compressed which is generated using the above estimation method. $R_T$ denotes the target bit rate of the frame to be compressed, and $Q_T$ denotes the target quantization level to be applied to the frame to be compressed. As described above, the target bit rate $R_T$ of the frame to be compressed is calculated based on the bit rate information $R_n$ of the immediately-preceding frame and the bit rates of the uncompressed frames of the image signal.

i) This explanation assumes that $Q_n$ is equal to $Q_{n+1}$. This supposition is made to estimate the expected bit rate $R_{n+1}$ when the quantizaiton level $Q_n$ applied to the immediately-preceding frame is applied to the frame to be compressed.

ii) $A_n$ is defined as in Equation 3 below. Here, considering Equation 1, $A_n$ is a parameter in which factors of coding complexity are reflected. This definition is attributed to an inversely proportional relationship between the quantization level and the bit rate.

$$A_n = R_n \times Q_n. \qquad\qquad \ldots (3)$$

iii) Thus, since $R_n = A_n / Q_n$ from Equation 3, Equation 4 can be derived:

$$A_{n+1} = \ R_{n+1} \times Q_{n+1}. \qquad\qquad \ldots (4)$$

iv) The result shown in Equation 5 can be derived from the assumption that $Q_n$ is equal to $Q_{n+1}$:

$$A_{n+1} = \ R_{n+1} \times Q_n. \qquad\qquad \ldots (5)$$

v) When the target bit rate and the target quantization level of the frame to be compressed are assumed to be $R_T$ and $Q_T$, respectively, $R_{n+1}$ corresponds to $R_T$ and $Q_{n+1}$ corresponds to $Q_T$. Thus, from Equation 4, Equations 6 and 7 can be derived:

$$A_{n+1} = \ R_T \times Q_T \qquad\qquad \ldots (6)$$

$$R_T = A_{n+1} / Q_T. \qquad \dots (7)$$

vi) Equations 8 and 9 are derived from the substitution of $A_{n+1}$ of Equation 5 for Equation 7:

$$R_T = ( R_{n+1} \times Q_n )/ Q_T \qquad \dots (8)$$

$$Q_T = ( R_{n+1} \times Q_n )/ R_T \qquad \dots (9)$$

vii) Accordingly, the same result as that of Equation 2 can be deduced. It should be noted that parameter $A_n$ on which the coding complexity is reflected is considered and offset to reflect the complexity of the coding, but that coding complexity is not specifically calculated.

Referring to Figures 2 to 4, at step S310, the frame to be compressed is input to the DCT-based compressor 200.

At step S320, the bit rate information $R_n$ of the immediately-preceding frame is input from the buffer 207 to the bit rate controller 220. At step S330, the target bit rate operator 221 of the bit rate controller 220 determines the target bit rate $R_T$ of the frame to be compressed. This is based on the bit rate information $R_n$ of the immediately-preceding frame and the bit rates of the uncompressed frames of the image signal. At step S340, the expected bit rate estimator 223 estimates the expected bit rate $R_{n+1}$ of the frame to be compressed based on the bit rate information $R_{n-a}$, $R_{n-a+1}$,..., $R_{n-1}$, and $R_n$ of a plurality of previous frames. At step S350, the quantization level operator 225 determines the target quantization level $Q_T$ to be applied to the frame to be compressed based on the target bit rate $R_T$, the expected bit rate $R_{n+1}$, and the quantization level $Q_n$ applied to the immediately-preceding frame. Here, the target quantisation level $Q_T$ is preferably determined using Equation 2 above.

At step S360, the target quantization level $Q_T$ is output to the quantiser 203, and the DCT-processed frame to be compressed is quantized based on the target quantization level $Q_T$. At step S370, the quantized frame to be compressed is compressed and output via the variable length coder 205 and the buffer 207.

As described above, in an apparatus and a method for controlling a bit rate according to exemplary embodiments of the present invention, an additional block is not required to determine a complexity coefficient, and moreover, the complexity coefficient does not have to be additionally calculated. Thus, the speed at which compression takes place is increased by at least the time required for calculating the complexity coefficient. Also, since a memory is not required to determine the complexity coefficient, manufacturing costs decrease. A product for adopting exemplary embodiments of the present invention is thus cheaper. Moreover, exemplary embodiments of the present invention can be implemented as a software program and thus can be applied to already-designed hardware.

## Claims

1. A controller (220) for generating a quantisation level for use in compressing a current frame in a sequence of frames of an image signal, the controller (220) comprising:

   one of a Kalman filter and an average filter for determining an expected bit rate of the current frame; and
   means (225) configured to generate the quantisation level $Q_T$ in accordance with the equation:

$$Q_T = (Q_n / R_T) \times R_{n+1},$$

   wherein $Q_n$, $R_T$, and $R_{n+1}$ denote the quantization level applied to the immediately-preceding frame in the sequence, the target bit rate of the current frame, and the expected bit rate of the current frame, respectively.

2. A controller (220) according to claim 1, wherein the expected bit rate is determined in accordance with the bit rate of a preceding frame in the sequence.

**3.** An apparatus for controlling a bit rate of an image signal when each frame of the image signal is compressed, the apparatus comprising:

a buffer (207) for storing information as to a bit rate of a frame immediately preceding a frame to be compressed;
a bit rate controller (220) comprising a controlled according to claim 1 or 2, the bit rate controller (220) arranged to determine the target and expected bit rates of the current frame to be compressed based on the bit rate of an immediately-preceding frame and calculating the quantisation level to be applied to the frame to be compressed based on the target bit rate, the expected bit rate, and the quantisation level applied to the immediately-preceding frame; and
means (203) for performing a quantisation process based on the calculated quantisation level.

**4.** An apparatus according to claim 3, wherein the bit rate controller (220) comprises:

a target bit rate operator (221) for generating the target of the frame to be compressed based on the bit rate of the immediately-preceding frame and bit rates of uncompressed frames of the image signal;
an expected bit rate estimator (223) for estimating the expected bit rate by using a predetermined estimation filter to which bit rates of a plurality of frames previous to the frame to be compressed are applied; and
a quantisation level operator (225) for determining the quantisation level to be applied to the frame to be compressed based on the target bit rate, the expected bit rate, and the quantisation level applied to the immediately-preceding frame.

**5.** An apparatus according to claim 4, wherein the target bit rate operator (221) generates the target bit rate according to a ratio of the bit rates of the previous frames comprising the immediately-preceding frame to the bit rates of the uncompressed frames of the image signal.

**6.** A method of calculating a quantisation level for use in compressing a current frame in a sequence of frames of an image signal, the method comprising:

estimating the expected bit rate of the current frame using one of an average filter and a Kalman filter capable of estimating data; and
calculating the quantisation level $Q_T$ in accordance with the equation:

$$Q_T = (Q_n \ / \ R_T) \times R_{n+1,}$$

wherein $Q_n$, $R_T$, and $R_{n+1}$ denote the quantization level applied to the immediately-preceding frame in the sequence, the target bit rate of the current frame, and the expected bit rate of the current frame, respectively,

**7.** A method of controlling a bit rate of each frame of an image signal when each frame of the image signal is compressed, the method comprising the steps of:

generating target and expected bit rates of the current frame to be compressed based on a bit rate of a frame immediately preceding the frame to be compressed;
calculating a quantization level to be applied to the current frame to be compressed in accordance with the method of claim 6; and
performing a quantization process based on the calculated quantisation level.

**8.** A method according to claim 7 wherein the calculation of the quantisation level comprises the steps of:

determining the target bit rate of the frame to be compressed based on the bit rate of the immediately-preceding frame and bit rates of uncompressed frames of the image signal;
applying bit rates of a plurality of frames previous to the frame to be compressed to the average filter or Kalman filter; and
determining the quantisation level to be applied to the frame to be compressed based on the target bit rate, the expected bit rate, and the quantisation level applied to the immediately-preceding frame.

**9.** A method according to claim 7 or 8, wherein the target bit rate is determined according to a ratio of the bit rates of the previous frames comprising the immediately-preceding frame to the bit rates of the uncompressed frames of the image signal.

**Patentansprüche**

1. Steuerung (220) zum Erzeugen eines Quantisierungspegels zur Verwendung beim Komprimieren eines aktuellen Frames in einer Sequenz von Frames eines Bildsignals, wobei die Steuerung (220) Folgendes aufweist:

   ein Kalman-Filter oder ein Mittelwertbildungsfilters zum Bestimmen einer erwarteten Bitrate des aktuellen Frames; und
   eine Einrichtung (225), die konfiguriert ist, um den Quantisierungspegel $Q_T$ gemäß der Gleichung

$$Q_T = (Q_n / R_T) \times R_{n+1}$$

   zu erzeugen,
   wobei $Q_n$, $R_T$ und $R_{n+1}$ jeweils den auf den direkt vorangehenden Frame in der Sequenz angewendeten Quantisierungspegel, die Soll-Bitrate des aktuellen Frames und die erwartete Bitrate des aktuellen Frames bezeichnen.

2. Steuerung (220) nach Anspruch 1, wobei die erwartete Bitrate gemäß der Bitrate eines vorangehenden Frames in der Sequenz bestimmt wird.

3. Vorrichtung zu Steuern einer Bitrate eines Bildsignals, wenn jeder Frame des Bildsignals komprimiert ist, wobei die Vorrichtung Folgendes aufweist:

   einen Puffer (207) zum Speichern von Information in Bezug auf eine Bitrate eines einem zu komprimierenden Frame direkt vorangehenden Frames;
   eine Bitraten-Steuerung (220), die eine Steuerung nach Anspruch 1 oder 2 umfasst, wobei die Bitraten-Steuerung (220) angeordnet und eingerichtet ist, die Soll-Bitrate und die erwartete Bitrate des zu komprimierenden aktuellen Frames basierend auf der Bitrate eines direkt vorangehenden Frames zu bestimmen, und die den auf den zu komprimierenden Frame anzuwendenden Quantisierungspegel basierend auf der Soll-Bitrate, der erwarteten Bitrate und dem auf den direkt vorangehenden Frame angewendeten Quantisierungspegel berechnet; und
   eine Einrichtung (203) zum Durchführen eines Quantisierungsprozesses basierend auf dem berechneten Quantisierungspegel.

4. Vorrichtung nach Anspruch 3, wobei die Bitraten-Steuerung (220) Folgendes aufweist:

   einen Soll-Bitraten-Operator (221) zum Erzeugen der Soll-Bitrate des zu komprimierenden Frames basierend auf der Bitrate des direkt vorangehenden Frames und Bitraten von unkomprimierten Frames des Bildsignals;
   eine Schätzeinheit (223) für erwartete Bitraten zum Schätzen der erwarteten Bitrate durch Verwenden eines vorbestimmten Schätzfilters, an welches Bitraten einer Vielzahl von Frames, die dem zu komprimierenden Frame vorangehen, angelegt werden; und
   einen Quantisierungspegel-Operator (225) zum Bestimmen des auf den zu komprimierenden Frame anzuwendenden Quantisierungspegels basierend auf der Soll-Bitrate, der erwarteten Bitrate und dem auf den direkt vorangehenden Frame angewendeten Quantisierungspegel.

5. Vorrichtung nach Anspruch 4, wobei der Soll-Bitraten-Operator (221) eine Soll-Bitrate gemäß einem Verhältnis der Bitraten der vorherigen Frames, einschließlich des direkt vorangehenden Frames, zu den Bitraten der unkomprimierten Frames des Bildsignals erzeugt.

6. Verfahren zum Berechnen eines Quantisierungspegels zur Verwendung beim Komprimieren eines aktuellen Frames in einer Sequenz von Frames eines Bildsignals, wobei das Verfahren Folgendes aufweist:

   Schätzen der erwarteten Bitrate des aktuellen Frames unter Verwendung eines Mittelwertbildungsfilters oder eines Kalman-Filters, das Daten schätzen kann; und
Berechnen des Quantisierungspegels $Q_T$ gemäß der Gleichung

$$Q_T = (Q_n / R_T) \times R_{n+1},$$

wobei $Q_n$, $R_T$ und $R_{n+1}$ jeweils den auf den direkt vorangehenden Frame in der Sequenz angewendeten Quantisierungspegel, die Soll-Bitrate des aktuellen Frames und die erwartete Bitrate des aktuellen Frames bezeichnen.

7. Verfahren zum Steuern einer Bitrate jedes Frames eines Bildsignals, wenn jeder Frame des Bildsignals komprimiert wird, wobei das Verfahren die folgenden Schritte aufweist:

Erzeugen einer Soll-Bitrate und einer erwarteten Bitrate des zu komprimierenden aktuellen Frames basierend auf einer Bitrate eines dem zu komprimierenden Frame direkt vorangehenden Frames;
Berechnen eines auf den zu komprimierenden Frame anzuwendenden Quantisierungspegels gemäß dem Verfahren nach Anspruch 6; und
Durchführen eines Quantisierungsprozesses basierend auf dem berechneten Quantisierungspegel.

8. Verfahren nach Anspruch 7, wobei die Berechnung des Quantisierungspegels die folgenden Schritte aufweist:

Bestimmen der Soll-Bitrate des zu komprimierenden Frames basierend auf der Bitrate des direkt vorangehenden Frames und Bitraten von unkomprimierten Frames des Bildsignals;
Anlegen von Bitraten einer Vielzahl von Frames, die dem zu komprimierenden Frame vorangehen, an das Mittelwertbildungsfilter oder das Kalman-Filter; und
Bestimmen des auf den zu komprimierenden Frame anzuwendenden Quantisierungspegels basierend auf der Soll-Bitrate, der erwarteten Bitrate und dem auf den direkt vorangehenden Frame angewendeten Quantisierungspegel.

9. Verfahren nach Anspruch 7 oder 8, wobei die Soll-Bitrate gemäß einem Verhältnis der Bitraten der vorherigen Frames, einschließlich des direkt vorangehenden Frames, zu den Bitraten der unkomprimierten Frames des Bildsignals bestimmt wird.

**Revendications**

1. Unité de commande (220) pour générer un niveau de quantification destiné à être utilisé dans la compression d'une trame courante dans une séquence de trames d'un signal d'image, l'unité de commande (220) comprenant :

l'un d'un filtre de Kalman et d'un filtre de moyenne pour déterminer un débit binaire attendu de la trame courante ; et
un moyen (225) configuré pour générer le niveau de quantification $Q_T$ conformément à l'équation suivante :

$$Q_T = (Q_n / R_T) \times R_{n+1},$$

dans laquelle $Q_n$, $R_T$ et $R_{n+1}$ désignent respectivement le niveau de quantification appliqué à la trame immédiatement précédente dans la séquence, le débit binaire cible de la trame courante et le débit binaire attendu de la trame courante.

2. Unité de commande (220) selon la revendication 1, dans laquelle le débit binaire attendu est déterminé en fonction du débit binaire d'une trame précédente dans la séquence.

3. Appareil pour commander un débit binaire d'un signal d'image lorsque chaque trame du signal d'image est comprimée, l'appareil comprenant :

un tampon (207) pour stocker des informations concernant un débit binaire d'une trame précédant immédiatement une trame à comprimer ;

une unité de commande de débit binaire (220) comprenant une unité de commande selon la revendication 1 ou 2, l'unité de commande de débit binaire (220) étant conçue pour déterminer les débits binaires cible et attendu de la trame courante devant être comprimée sur la base du débit binaire d'une trame immédiatement précédente et pour calculer le niveau de quantification devant être appliqué à la trame devant être comprimée sur la base du débit binaire cible, du débit binaire attendu et du niveau de quantification appliqué à la trame immédiatement précédente ; et

un moyen (203) pour effectuer un traitement de quantification sur la base du niveau de quantification calculé.

4. Appareil selon la revendication 3, dans lequel l'unité de commande de débit binaire (220) comprend :

un opérateur de débit binaire cible (221) pour générer le débit binaire cible de la trame devant être comprimée sur la base du débit binaire de la trame immédiatement précédente et de débits binaires de trames non comprimées du signal d'image ;

un estimateur de débit binaire attendu (223) pour estimer le débit binaire attendu en utilisant un filtre d'estimation prédéterminé auquel sont appliqués des débits binaires d'une pluralité de trames précédant la trame devant être comprimée ; et

un opérateur de niveau de quantification (225) pour déterminer le niveau de quantification devant être appliqué à la trame devant être comprimée sur la base du débit binaire cible, du débit binaire attendu et du niveau de quantification appliqué à la trame immédiatement précédente.

5. Appareil selon la revendication 4, dans lequel l'opérateur de débit binaire cible (221) génère le débit binaire cible en fonction d'un rapport des débits binaires des trames précédentes comprenant la trame immédiatement précédente aux débits binaires des trames non comprimées du signal d'image.

6. Procédé de calcul d'un niveau de quantification destiné à être utilisé dans la compression d'une trame courante dans une séquence de trames d'un signal d'image, le procédé consistant à :

estimer le débit binaire attendu de la trame courante en utilisant l'un d'un filtre de moyenne et d'un filtre de Kalman capables d'estimer des données ; et

calculer le niveau de quantification $Q_T$ conformément à l'équation suivants :

$$Q_T \;=\; (Q_n \;/R_T) \;\times\; R_{n+1},$$

dans laquelle $Q_n$, $R_T$ et $R_{n+1}$ désignent respectivement le niveau de quantification appliqué à la trame immédiatement précédente dans la séquence, le débit binaire cible de la trame courante et le débit binaire attendu de la trame courante.

7. Procédé de commande d'un débit binaire de chaque trame d'un signal d'image lorsque chaque trame du signal d'image est comprimée, le procédé comprenant les étapes consistant à :

générer des débits binaires cible et attendu de la trame courante devant être comprimée sur la base d'un débit binaire d'une trame précédant immédiatement la trame devant être comprimée ;

calculer un niveau de quantification devant être appliqué à la trame courante devant être comprimée en conformité avec le procédé de la revendication 6 ; et

effectuer un traitement de quantification sur la base du niveau de quantification calculé.

8. Procédé selon la revendication 7, dans lequel le calcul du niveau de quantification comprend les étapes consistant à :

déterminer le débit binaire cible de la trame devant être comprimée sur la base du débit binaire de la trame immédiatement précédente et des débits binaires de trames non comprimées du signal d'image ;

appliquer des débits binaires d'une pluralité de trames précédant la trame devant être comprimée au filtre de moyenne ou au filtre de Kalman ; et

déterminer le niveau de quantification devant être appliqué à la trame devant être comprimée sur la base du débit binaire cible, du débit binaire attendu et du niveau de quantification appliqué à la trame immédiatement précédente.

**9.** Procédé selon la revendication 7 ou 8, dans lequel le débit binaire cible est déterminé en fonction d'un rapport des débits binaires des trames précédentes comprenant la trame immédiatement précédente aux débits binaires des trames non comprimées du signal d'image.

# FIG. 1

# FIG. 2

EP 1 619 900 B1

# FIG. 3

221

TARGET BIT
RATE OPERATOR

223

EXPECTED BIT
RATE ESTIMATOR

~220

QUANTIZATION LEVEL OPERATOR

225

# FIG. 4

START

S310 — INPUT FRAME TO BE COMPRESSED

S320 — INPUT BIT RATE OF IMMEDIATELY-PRECEDING FRAME

S330 — OPERATE TARGET BIT RATE

S340 — ESTIMATE EXPECTED BIT RATE

S350 — OPERATE TARGET QUANTIZATION LEVEL

S360 — QUANTIZE DCT-PROCESSED FRAME TO BE COMPRESSED

S370 — COMPRESS FRAME TO BE COMPRESSED

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03028237 A